# EUROPEAN PATENT APPLICATION

(11) **EP 2 815 876 A2**
(43) Date of publication of application: **24.12.2014**
(21) Application number: 14172865.9
(22) Date of filing: 18.06.2014
(51) Int. Cl.: B29D 30/38, B29B 15/12

(54) **Adhesion of a reinforcing cord or filament to a rubber matrix and pneumatic tire comprising a belt reinforing structure**

(30) Priority: 20.06.2013 US 201313922362
(71) Applicant: The Goodyear Tire & Rubber Company, Akron, Ohio 44316 (US)
(72) Inventor: Mzabi, Samy, 9048 Ettelbruck (LU); Siffer, Frederic Gerard Auguste, 57540 Petite Rosselle (FR); Bertemes, Gilles, 7511 Rollingen (LU); Boes, Claude Ernest Felix, 9147 Erpeldange (LU); Gillick, James Gregory, Akron, Ohio 44313 (US)
(74) Representative: Kutsch, Bernd

(57) **Abstract**

A method for forming an adhesion joint between a filament (1010) or cord (1100) and a rubber matrix is disclosed. The method comprises the steps of: providing a filament (1010) or a cord (1100) having an initial relatively smooth surface; texturing the smooth surface or the filament (1010) or a cord (1100) such that the resulting surface is rougher than the initial surface of the filament (1010) or cord (1100); depositing a polymer coating, preferably an uniform polymer coating, onto the textured surface of the filament (1010) or cord (1100) by plasma polymerization of an organic precursor (201, 301) in a plasma (203, 303), preferably an air plasma and/or an atmospheric plasma; and inserting the textured and coated filament (1010) or cord (1101) into a rubber matrix. Also, cord or filament for use in a pneumatic tire is disclosed wherein the cord (1101) or the filament is micro-textured and comprises a polymer coating. Finally, a pneumatic tire comprising a reinforcing structure comprising such a filament or cord (1101) is disclosed.

## Description

### Field of the Invention

The present invention is directed a method for adhering cords or filaments such as metal cords to rubber, to a respective cord or filament and to a pneumatic tire comprising such a cord or filament in a reinforcing structure.

### Background of the Invention

It is frequently desirable to reinforce rubber articles (such as pneumatic and non-pneumatic tires, conveyor belts, power transmission belts, timing belts, hoses, etc.) by incorporating reinforcing elements. Pneumatic tires are often reinforced with reinforcing elements. Such reinforcing elements may comprise high carbon steel, high carbon steel coated with a thin layer of brass, nylon, polyester, carbon, glass, polyamide, etc. Such a reinforcing element may be a monofilament, but may also be prepared from several filaments that are stranded together to produce a cord. The strands of filaments may also be cabled to form the cord. It is beneficial for the reinforcing elements in pneumatic tires to exhibit high strength and ductility, as well as high fatigue resistance.

Transformation of a metal alloy into a filament suitable for reinforcing a tire may involve multiple processing stages, including rough drawing, patenting, brass plating, and fine drawing of a metal rod. Such a transformation may include many variations of processing stages, such as repetition of different stages.

Drawing of the metal rod may reduce the original diameter to a smaller diameter by passing the wire through a conical die. Drawing of the metal rod may increase the strength characteristics of the reduced diameter rod. Cold drawing may be conducted with either wet or dry lubricants. Formation of a filament with desirable properties may include multiple drawing steps both prior to, and after, patenting of the filament.

Patenting may obtain a structure which combines high tensile strength with high ductility, and thus impart to the filament the ability to withstand a large reduction in area to produce the desired finished sizes possessing a combination of high tensile strength and increased toughness. Patenting may be a continuous process and consist of first heating the metal alloy to a temperature within the range of 900° C to 1150° C to form austenite. Then, the austenite may cool at a rapid rate to a lower temperature at which transformation occurs thereby changing the crystal structure of ferrite from face centered cubic into pearlite, a eutectoid mixture of ferrite and cementite, which may yield the desired mechanical properties of the filament. While it may be desired to form a fully pearlitic structure, additional phases may be present, such as undissolved carbides, pro-eutectoid cementite, bainite, etc.

For metal reinforcing elements, the goal may be an increase in strength of the filament without a loss in ductility and fatigue resistance. The resulting filament may be characterized as high tensile, super tensile, ultra tensile, and mega tensile wherein each strength is defined by a minimum tensile strength.

In adhering such metal reinforcing elements to a rubber matrix, such as a pneumatic tire, two dissimilar materials are joined. In many cases, one or both of the materials must have their surface properties adjusted. Adjustment of surface properties of materials in manufacturing often involves surface treatment technology. Non-limiting examples of these surface properties include surface energy, chemical inertness, conductivity, dye reception, and/or adhesion. Examples of applications using surface treatment and preparation include anti-corrosion coatings on corrodible metals such as iron and steel; bio-compatible coatings on internal implants; waterproof layers on electronics; and inorganic and organic continuous reinforcement materials for tires.

Application of coatings, adhesives, sealants, and elastomers (CASE) to substrates often requires particular care in treating or pre-treating the surface to avoid adhesive failure between the substrate and the applied CASE compounds. Many CASE application processes involve steps of (a) cleaning or roughening the surface, (b) applying a primer that either bonds to the surface or etches it, and/or (c) applying an enhancement agent that adds additional bonding functionality. CASE compounds are used in industries including construction, automotive, medical, dental, labeling, electronics, and packaging.

In the automotive industry, CASE compounds are used in conjunction with rubber reinforcement processes. Disadvantageously, reinforced rubber is susceptible to cracking due to poor adhesion of the reinforcement to the rubber. Other goals of joining dissimilar materials include improving accuracy of manufacturing, productivity, levels of automation, reliability, and/or manufacturability, while decreasing harmful side effects, quantity of materials used, and/or waste of energy and materials. For example, some CASE compounds have substantial amounts of waste. Often coupling agent primers are less than 1% active agent and 99% carrier solvent. In another example, cleaning materials have harmful side effects such as flammability and/or noxious solvents, such as isopropyl alcohol or toluene. In other cases, paint-like layers often have to air dry within 30 seconds and so use volatile solvents with the same issues as the cleaning materials. Aqueous alternatives typically require long drying times and/or high energy consumption to fully evaporate the water. Energy and money are wasted to remediate these emissions and to protect workers' health.

Plasma polymerization has been developed as a tool to modify material surfaces while improving manufacturability, levels of automation, and accuracy of manufacturing, while decreasing harmful side effects as well as waste of energy and materials. There are different types of plasmas that are defined by their output temperature, their pressure conditions, as well as the equilibration state regarding the chemistry and thermal state. For example, there are plasmas created under subambient pressure conditions. Examples include a high plasma density mode plasma and a low plasma density mode plasma generated with a magnetron, which is typically used in physical vapor deposition. Other ambient pressure examples include glow discharge, inductively-coupled, and recombining plasmas. The glow discharge is characterized by low velocity movement of gas of a few meters/second. It features both thermal and chemical non-equilibrium. An inductively-coupled plasma has low to moderate gas movement. It features local thermal equilibria. The recombining nitrogen or air plasmas have high gas velocities of approximately 1 km/sec and feature chemical equilibria. Additional examples of classes of plasmas are determined by their ionization methods, such as microwave resonance and electrical discharge.

When plasmas are applied to high volume production processes outside a laboratory, additional manufacturability and automation considerations arise, such as speed of operation, compatibility with substrates, and contamination. In many applications, the plasma treatments occur quickly, typically on the order of nanoseconds to a few minutes, which effectively preclude batch vacuum techniques such as physical vapor deposition.

The high temperature plasmas may thermally combust or thermally shock substrates, especially ones with low thermal conductivity as well as low melting or combustion points. In addition, some surfaces are imperfect, such as those having dust, organic body oils, and debris from shipment and handling. In light of the foregoing, a method that improves accuracy of manufacturing, productivity, levels of automation, reliability, and/or manufacturability while decreasing harmful side effects, quantity of materials used, and/or waste of energy and materials for a high volume production process for preparing a surface for joining two dissimilar materials or to receive CASE compounds.

One conventional method deposits a coating on to a clean surface during a first time period, and depositing a high-velocity impact polymer reaction coating on the surface at ambient air pressure during a second time period using atmospheric pressure air plasma (APAP). Another conventional method may apply a coating of mixed prepolymer vapor and carrier gas or mist of small droplets. That mixture may be introduced into atmospheric pressure air plasma to form a polymer reaction compound. The polymer reaction compound may then be applied with high-velocity impact driven by the exiting gases of the APAP.

### Summary of the Invention

The invention relates to a method in accordance with claim 1, to a filament or cord in accordance with claim 6 and to a pneumatic tire in accordance with claim 13.

Dependent claims refer to preferred embodiments of the invention.

A method in accordance with a preferred aspect of the present invention forms an adhesion joint between a cord (or a filament) and a rubber matrix. The method includes the steps of: providing a cord having an initial relatively smooth surface; texturing the smooth surface such that the resulting surface is rougher than the initial surface of the cord; depositing a uniform polymer coating on to the textured surface of the cord by plasma polymerization of an organic precursor and an air plasma; and inserting the cord into a rubber matrix such that the resulting surface provides enhanced adhesion to the rubber matrix compared to the adhesion of the initial surface to the rubber matrix or adhesion of the textured surface to rubber matrix.

According to another preferred aspect of the method, the texturing step is performed by a laser.

According to still another preferred aspect of the method, the cord is placed in a carcass ply of a pneumatic tire, in a belt ply of a pneumatic tire, in a flipper of a pneumatic tire, in a runflat insert of a pneumatic tire, in a chipper of a pneumatic tire, in an overlay of a pneumatic tire, in an apex of a pneumatic tire or in a gum strip of a pneumatic tire.

In another preferred aspect of the invention, the pneumatic tire includes a carcass comprising a reinforcing ply structure extending between a pair of bead portions, a pair of sidewalls, each sidewall located radially outward of one of the pair of bead portions, a tread, a belt reinforcing structure located radially outward of the carcass and radially inward of the tread, and an apex located in each sidewall. The pneumatic tire has a reinforcing structure reinforced with a cord having a surface modified both by micro-texturing and plasma polymerization.

According to a preferred aspect of the pneumatic tire, the surface is micro-textured by a laser.

According to another preferred aspect of the pneumatic tire, the reinforcing structure is the carcass, the carcass reinforcing ply structure, the belt reinforcing structure or the apex.

According to still another preferred aspect of the pneumatic tire, the cord is constructed of steel.

According to yet another preferred aspect of the pneumatic tire, the cord comprises steel filaments micro-textured by a laser prior to being placed in the cord.

According to still another preferred aspect of the pneumatic tire, the cord comprises steel filaments placed in the cord prior to the cord being micro-textured by a laser and prior to plasma polymerization coating of the cord.

According to yet another preferred aspect of the pneumatic tire, the reinforcing structure is located adjacent one of the bead portions.

### Definitions

The following definitions are applicable for the present invention.

"Apex" means an elastomeric filler located radially above the bead core and between the plies and the turnup ply.

"Bead" means that part of the tire comprising an annular tensile member wrapped by ply cords and shaped, with or without other reinforcement elements such as flippers, chippers, apexes, toe guards and chafers, to fit the design rim.

"Belt structure" means one or at least two annular layers or plies of parallel cords, woven or unwoven, underlying the tread, unanchored to the bead, and having cords inclined respect to the equatorial plane of the tire. The belt structure may also include plies of parallel cords inclined at relatively low angles, acting as restricting layers.

"Carcass" means the tire structure apart from the belt structure, tread, undertread, and sidewall rubber over the plies, but including the beads.

"Chipper" refers to a narrow band of fabric or steel cords located in the bead area whose function is to reinforce the bead area and stabilize the radially inward most part of the sidewall.

"Cord" means one of the reinforcement strands which the reinforcement structures of the tire may comprise.

"Elastomer" means a resilient material capable of recovering size and shape after deformation.

"Fiber" is a unit of matter, either natural or man-made that forms the basic element of filaments. Characterized by having a length at least 100 times its diameter or width.

"Flipper" refers to a reinforcing fabric around the bead wire for strength and to tie the bead wire in the tire body.

"High Tensile Steel (HT)" means a carbon steel with a tensile strength of at least 3400 MPa at 0.20 mm filament diameter.

"Inner" means toward the inside of the tire and "outer" means toward its exterior.

"Laser" means Light Amplification by Stimulated Emission of Radiation; a device that creates and amplifies electromagnetic radiation of a specific frequency through the process of stimulated emission; the radiation emitted by a laser may consist of a coherent beam of photons, all in phase and having the same polarization.

"Lateral" means an axial direction.

"Mega Tensile Steel (MT)" means a carbon steel with a tensile strength of at least 4500 MPa at 0.20 mm filament diameter.

"Normal Tensile Steel (NT)" means a carbon steel with a tensile strength of at least 2800 MPa at 0.20 mm filament diameter.

"Radial" and "radially" are used to mean directions radially toward or away from the axis of rotation of the tire.

"Relief" means variation in height of a surface.

"Roughness" means the coarseness or unevenness of a surface, such as from projections, irregularities, breaks, etc. (e.g., amount of nonsmoothness). Roughness is measured in accordance with DIN EN ISO 4287.

"Self-supporting run-flat" means a type of tire that has a structure wherein the tire structure alone is sufficiently strong to support the vehicle load when the tire is operated in the uninflated condition for limited periods of time and limited speed. The sidewall and internal surfaces of the tire may not collapse or buckle onto themselves due to the tire structure alone (e.g., no internal structures).

"Smoothness" means a surface of uniform consistency; a surface free from projections or unevenness or generally flat or unruffled.

"Super Tensile Steel (ST)" means a carbon steel with a tensile strength of at least 3650 MPa at 0.20 mm filament diameter.

"Texture" means the general physical appearance of a surface, such as with respect to the size, shape, size variability, and geometric arrangement of its discontinuities (e.g., not smooth).

"Ultra Tensile Steel (UT)" means a carbon steel with a tensile strength of at least 4000 MPa at 0.20 mm filament diameter.

### Brief Description of the Drawings

The present invention will be described by way of example and with reference to the accompanying drawings, in which:
FIG. 1 shows a schematic representation of an example of deposition of a high-velocity impact polymer reaction coating onto a surface in accordance with part of the present invention.
FIG. 2 shows a schematic representation of a conventional plasma polymerization nozzle.
FIG. 3 shows a schematic representation of a plasma polymerization nozzle in accordance with the present invention.
FIG. 4 represents a schematic flowchart of a process in accordance with part of the present invention.
FIG. 5 represents a schematic flowchart an example process in accordance with the present invention.

### Detailed Description of an Example of the Present Invention

Reference will now be made in example detail to compositions, embodiments, and methods of the present invention known to the inventors. However, it should be understood that disclosed embodiments are merely exemplary of the present invention which may be embodied in various and alternative forms. Therefore, specific details disclosed herein are not to be interpreted as limiting, rather merely as representative bases for teaching one skilled in the art to variously employ the present invention.

In accordance with an embodiment of the present invention, a laser forms a micro-texture at the surface of tire reinforcing cords, such as cords of steel, inorganic material, organic material, aramid, etc. The micro-texture roughens the smooth surface thereby improving adhesion between the cords and the rubber matrix of the tire, thereby improving the durability and fatigue performance of the tire. The micro-texture may be varied by adjusting the wavelength, focus (or accuracy), continuity of power, and/or angle of incidence of the laser. The power may have a power/accuracy comparable to conventional medical lasers. Micro-texturing means establishing surface texture having a roughness in the upper nanometer range (> 200 nm, as measured in accordance with DIN EN ISO 4287) and in the lower micro-meter range (< 100 micrometer, as measured in accordance with DIN EN ISO 4287). Preferably, the roughness is in a range of from 300 nm to 10 micrometer or from 500 nm to 5 micrometer.

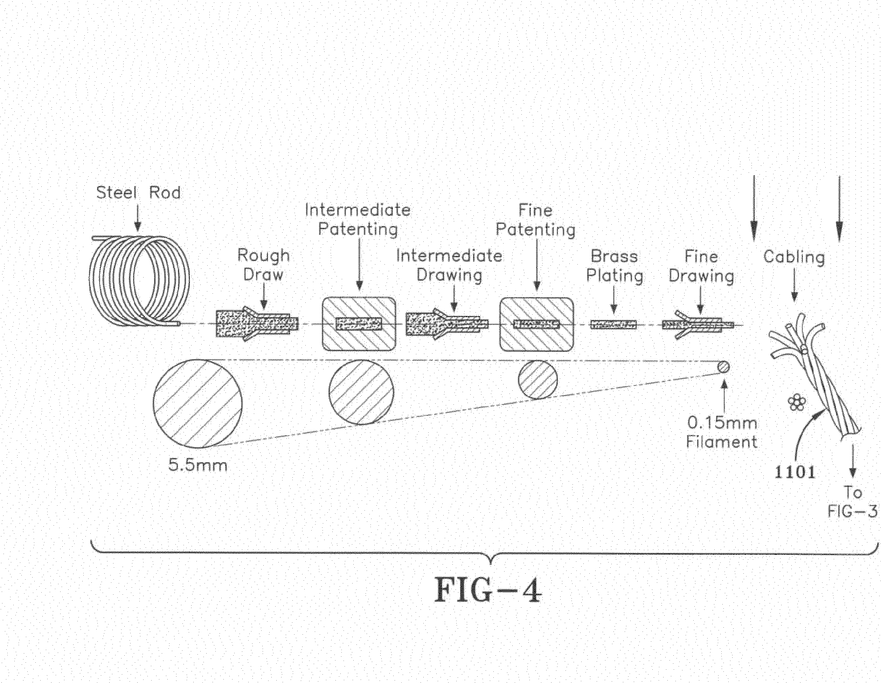

An example method for achieving a micro-textured surface on a metal wire is shown in FIG. 4. The initial rod may be steel, as described below. Carbon, C, the main strengthening element, is present in the amount of 0.95 to 1.3%. A steel with carbon content of 0.95 to 1.05% is processed to have a fine pearlitic structure characterized by a good combination of high ductility and strength. When the carbon content is greater than 1.05%, formation of cementite networks around blocks of pearlite colonies may occur. The increased carbon may result in a higher volume fraction of cementite leading to increased strength of the steel, but may dramatically reduce local ductility of the wire because broken cementite networks may cause crack formation.

However, the characteristics of the steel are controlled by a defined chemical composition and processing to provide a high strength wire with ductility sufficient for wire drawing without premature cracks. A steel wire may be processed to have ductile properties similar to a 0.96% C steel with improved strength. Chromium, Cr, may be present in amounts of 0.2 to 1.8%. Cr reduces a carbon diffusion rate resulting in both refining of the pearlite and reducing the thickness of the pro-eutectoid cementite network during patenting. The Cr may partition into cementite, affecting the cementite crystal structure and thereby reducing the cementite brittleness. If the amount of Cr is less than 0.2%, the addition may induce a poor effect. Conversely, if the amount of Cr is greater than 1.8%, hardenability becomes high and martensite or bainite may be formed during patenting, resulting in deterioration of cold workability.

Manganese, Mn, may be present in amounts of 0.2 to 0.8%. Mn is a strong solid solution strengthener of ferrite. When the Mn content is less than 0.2%, the strengthening effect may not be achieved, and when the Mn content is in excess of 0.8%, there may be a deterioration of cold workability, particularly due to a higher number of Mn-S inclusions.

Silicon, Si, may be present in amounts of 0.2 to 1.2%. Si imparts a strong solid solution strengthening on ferrite. When the Si content is less than 0.2%, the effect may be lost, and when the Si content is greater than 1.2%, the silicate inclusions may form thereby increasing the probability of wire breakage during drawing.

Cobalt, Co, if present, may be not more than 2.2%. Co suppresses the formation of cementite networks in the steel when the carbon content is greater than 1.0%. If the amount of Co is greater than 2.2%, cobalt inclusions may form, negatively affecting wire drawability. Co also produces additional cost.

Niobium, Nb, if present, may be not more than 0.1 % when carbon content is greater than 1.0%. The small amount of Nb may control the size of pearlite colonies by limiting growth of austenite grains at the austenitization stage of patenting and may prevent formation of large particles that may result in wire breaks during drawing. Small Nb may precipitate at austenite grain boundaries preventing excessive austenite grain growth, thereby improving wire ductility.

Boron, B, may be present in amounts of 0.006 - 0.0025 parts per million (ppm). The small amount of B may affect the structure of crystalline interfaces. During wire drawing, the volume fraction of ferrite/cementite interlamellar interfaces may increase up to ten percent. Boron atoms may aggregate at grain boundaries, thereby eliminating de-cohesion. Additionally, boron may tie free nitrogen, thereby reducing strain aging during drawing and improving ductility.

Exemplary Compositions for the Steel in Table 1.

**Table 1: Steel Wire Compositions**

| | Comparison | A | B | C |
|---|---|---|---|---|
| C, % | 0.80 | 0.96 | 1.04 | 1.10 |
| Cr, % | 0.04 | 0.20 | 0.5 | 0.5 |
| Mn, % | 0.6 | 0.6 | 0.6 | 0.6 |
| Si, % | 0.4 | 0.4 | 0.4 | 0.4 |
| Co, % | -- | | 1.8 | 1.9 |
| Nb, % | -- | | 0.006 | 0.006 |
| B, ppm | -- | .0016 | 0.0006 | 0.0006 |

After the desired steel composition is determined, the steel is hot rolled into wires with an initial diameter of 4.0 mm to 5.5 mm. The wire may be directly drawn for an initial diameter reduction, patented to the tensile strength desired, brass plated, and finely drawn to reduce the wire to a final diameter of 0.1 to 0.35 mm.

The hot rolled steel may be free of centerline carbon segregation with non-deformable inclusions having a size not more than 10 microns. The network of pro-eutectoid cementite, if present, may have a thickness of not more than 20 nm.

Each of the steps in FIG. 4 is described below. After the steel is hot rolled to an initial rod diameter of 4.0 to 5.5 mm, the rod may be subjected to a rough/direct draw. During the rough/direct draw, by using a dry drawing lubricant at a drawing rate up to 14 m/sec, the rod diameter may be reduced to a wire with a diameter between 1.1 mm to 2.0 mm.

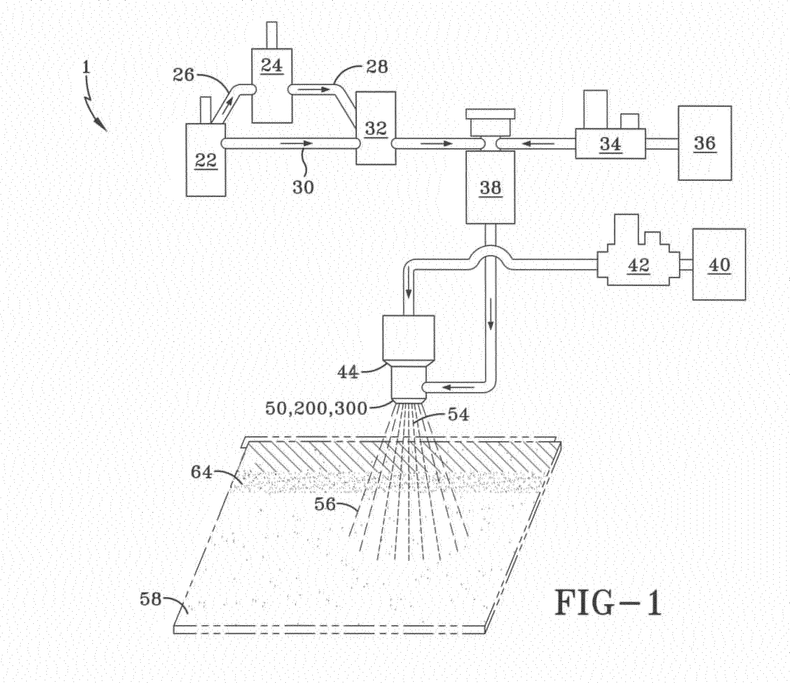

Following the rough/direct draw, the wire may be subject to intermediate patenting, which may include heat treating the wire to remove the effects of the rough/direct draw. Following the intermediate patenting, the wire may be subject to an intermediate draw/pass wherein the diameter of the wire is reduced to between 0.15 mm to 0.2 mm. Following the intermediate draw/pass, the wire may be subject to a fine patenting, which may include heat treating the wire to remove the effects of the intermediate draw. Following the fine patenting, the wire may be plated with brass to improve adhesion to the rubber matrix. Following the brass plating, the wire may be subject to a fine draw/pass wherein the diameter of the wire may be reduced by approximately 4.0% to 0.15 mm. Following the fine draw/pass, in accordance with the present invention, a laser may form a micro-texture at the surface of the wire for improving adhesion between the wire and the rubber matrix of a tire, thereby improving the durability and fatigue performance of the tire (left arrow in FIG. 4). The wire may then be combined with other micro-textured wires to form a cable that may be used for reinforcing part of a tire. Alternatively the wire may be cabled following the fine draw/pass and the resulting cable may be micro-textured by a laser (right arrow in FIG. 1).

During an example patenting process, the ductility of the wire may be improved and the wire may have a microstructure capable of yielding the target strength required of the wire. The example patenting process may have three distinct steps: austenitization, cooling, and transformation. During austenitization, the wire may be quickly heated to an initial high temperature within the range of 930° to 1100°C. The furnace temperature in the first furnace section may be 50° C to 100° C higher than the targeted austenitization temperature such that the wire may be heated faster to the desirable temperature. After the wire is heated to the initial high temperature, the wire may pass into at least one lower temperature furnace section to maintain a desired wire temperature. Temperature in the remaining furnace zones may gradually taper down to the target austenitization temperature in the last zone.

The wire may be given sufficient time for the alloy to be fully austenitized as it passes through the different heating sections; however, the wire may not be subjected to an excessive heating period. The goal in this example step may be a small austenite grain size (e.g., 50 microns or less). The temperature gradient experienced by the wire may result in a formation of a fine grained austenite microstructure yielding improved ductility characteristics of the patented wire. Heating of the wire may be accomplished by electric resistance, fluidized bed, or an electric or gas fired furnace. The duration in each furnace may depend on furnace length and wire speed.

After passing through the heated zones, as described above, the wire may be rapidly cooled to a temperature below the ideal transformation temperature. Typical transformation temperatures may range from 525° C to 620° C, depending on the amount of the alloying elements. The wire may be cooled to a temperature of about 20° C to about 80° C below the ideal temperature. This lower temperature may become the transformation temperature of the wire being worked.

The wire may be cooled at a rate higher than 30° C per second, or even 50° C per second. The wire may be cooled to the desired temperature within a period of 4 seconds or less. By quickly quenching the wire to a lower temperature, formation of a thick network of pro-eutectoid cementite may be suppressed thereby improving ductility of the wire.

After the wire is rapidly cooled to a transformation temperature, similar to the austenitization phase, the wire may pass through multiple, different temperature heat zones. The temperature in the first zone may be set to maintain the wire temperature at the transformation temperature. The second temperature zone may be 10° C to 20 °C less than the prior zone to compensate for heat generated by the wire as transformation from the austenite phase to the pearlite phase progresses and to thereby prevent the wire from overheating. The time in the second zone may be approximately half of the total duration for the wire to transform; total time may be dependent upon the length of time for the wire to achieve full transformation and the exact wire composition.

By employing a temperature gradient at this transformation step, the release of latent heat may result in fine pearlitic microstructure with an interlamellar spacing of less than 60 nm, thereby improving strength characteristics of the wire. After the transformation is fully completed, the wire may be cooled to ambient temperature.

During an example fine drawing process, a tapered draft or a mixed taperedeven area reduction draft may be employed. The wire may be drawn through a die with an 8° approach angle. Again, similar to the direct draw, the wire may be subject to a skin pass wherein the diameter of the wire is reduced by 4% for the purpose of reducing delamination.

By using the above die design and process and applying true strains of greater than 3.8, and preferably 3.9 to 4.5 as defined by ε_{d} = 2ln(dₒ/d) where dₒ is the starting wire diameter and d is the final diameter filament of tensile strength greater than 3800 MPa at wire diameters 0.35 mm are achieved and wires with a tensile strengths greater than 4500 MPa at 0.20 mm are possible. For example, the true strain in the drawing of 1.65 mm wire to 0.20 mm diameter filament is 4.2.

As stated above, prior to a fine draw, the wire may be treated for corrosion resistance and to improve wire drawability. Joining of metals by adhesion is a conventional alternative to welding and mechanical fastening because adhesion joints may eliminate local stress concentrations and thermal distortion, and reduce weight by eliminating rivets, screws, and/or other fasteners. However, the durability of an adhesion joint may largely depend on the joint design, type of adhesive, and the surface structure of the adherent. Metallic medical implants may be used for internal fixation of body parts, such as bones. Some of these implants may be removed after a fractured bone is healed. Other implants, such as dental implants and joint replacements, may remain in the body indefinitely. As a result, strong and rapid fixation between a metallic implant and bone tissue has been of prime importance to surgeons. Different surface texturing techniques have thus been conventionally utilized. Some conventional fixation methods may be: (1) to use bone cement or ceramic coating for direct chemical bonding; (2) to use a screw thread for mechanical locking; and (3) to make use of the surface texture on the implant to facilitate the attachment of bone cells, and subsequently bone tissue growth on the implant.

The advantages for laser micro-drilling of medical implants, compared with other technologies, may produce highly precise machining and complex geometries. The more holes drilled on the adherent surface, the more mechanical locking sites may result. Similarly, the more holes on the medical implant surface, the easier bone cells may attach, resulting in higher adhesion strength. Thus, the adhesion strength of metal surfaces subject to different surface texturing treatment may be increased by micro-texturing, such as by laser, sand-blasting, electro-erosion, acid treatment, etc. In accordance with part of the present invention, this principle also applies to metal surfaces adhering to a rubber matrix, as stated above.

Referring to FIG. 1, in an example atmospheric pressure air plasma (APAP) system 1 in accordance with part of the present invention, a polymerizable material in the form of prepolymer in a feedstock vessel 22 may be supplied in metering tube 30 using a mass flow controller 32 and vaporized and mixed with a carrier gas in mixing chamber 38. The carrier gas may be supplied from a carrier gas feedstock vessel 36 and introduced through a meter 34 into the mixing chamber 38. This mixture may be introduced into an atmospheric pressure air plasma apparatus 44 containing the plasma of ionized gas. The ionized gas may come from an ionization gas feedstock vessel 40 through a meter 42. The ambient air pressure around the air plasma apparatus 44 may range from greater than 50 kilopascals, 75 kilopascals, or 100 kilopascals, and less than 300 kilopascals, 250 kilopascals, 200 kilopascals, or 150 kilopascals. At an exit nozzle 50, the high-velocity polymer reaction coating may achieve velocities greater than 10-m/s, 50-m/s, or 75-m/s, and less than 200-m/s, 150-m/s, or 125-m/s. The gases may exit the nozzle 50 at a temperature less than 450 °C, 400 °C, 350 °C, 325 °C, or 300 °C, and greater than 70 °C, 100°C, 125 °C, or 150 °C. The temperature of the substrate 58 may be less than 95 °C, 85 °C, 75 °C, 70 °C, 65 °C, 60 °C, 55 °C, or 50 °C, depending upon the conditions of operation. This temperature at the substrate 58 allows this process to work with substrates that are susceptible to heat damage.

The gases from the exit nozzle 50 may be a spray pattern with the outer penumbra 56 having mostly ionized gas for cleaning and/or activating. Closer to the center of the spray pattern may be an area of the higher concentration 54 of high-velocity impact polymer reaction coating material. The substrate 58 receiving the high-velocity impact polymer reaction coating 64 may be a rubber reinforcement material.

The substrate 58 may be activatable by ionization and heat and may be in pristine condition, having a covering of debris, or be corroded. The substrate 58 may be cleaned, and partially activated, by an atmospheric pressure air plasma. When the atmospheric pressure air plasma is also a device depositing high-velocity impact polymer coatings, the penumbra 56 of the atmospheric pressure air plasma exiting from the nozzle 50 may have a cleaning function associated with the ionization and heat. Accordingly, the time period between the cleaning and/or activation step and the deposition step may be greater than 1 ms, 5 ms, 10 ms, 25 ms, or 100 ms.

One or more separate atmospheric pressure air plasmas may be provided to clean and/or activate the surface, followed by one or more separate atmospheric pressure air plasmas depositing high velocity impact polymer coatings. The APAPs may be operated in a sequential manner, in a parallel manner, or a combination thereof. When operated as a parallel set of multi-APAPs, typical spacing may be about 2 mm.

The cleaning and/or activating operation may be capable of operating at higher travel speeds than the deposition operation or a combined cleaning and/or activating operation, as well as a deposition operation. A cleaning operation using broader width passes and a deposition operation using raster-type passes may also be included. The cleaning and/or activating operation may be accomplished using other ionization technologies, such as corona discharge or combustion sources. The time periods between the cleaning/activation step and deposition may be greater than 0.1 s, 1 s, 5 s, 10 s, 25 s, or 100 s, and less than 150 s, 300 s, 600 s, 1800 s, 3600 s, 12 hr, 1 day, 2 days, or 5 days.

Gradients of prepolymers may be developed where an additional feedstock vessel 24 holding other prepolymers feeds through a supply line 26 to the prepolymer feedstock vessel 22 in order to incrementally adjust the ratio or ratios of the prepolymers in the feedstock. Other prepolymers may be fed through a supply line 28 to a metering device 32 that may be adjusted incrementally or step-wise based on the ratio or ratios of prepolymers.

The APAP may deliver a plasma air treatment to the substrate 58 to reactivate the substrate. For example, the substrate 58 may be cleaned and coated in one location, and then shipped to a second location for reactivation at a later time.

Plasma polymerization yields polymers in arrangements not typically found under normal chemical conditions. The polymers may be have highly branched chains, randomly terminated chains, or functional crosslinking sites. Absent are regularly repeating units, in general. This is a result of the fragmentation of the prepolymer molecules when they are exposed to the high-energy electrons inherent in the plasma. The reactions appear to proceed by several reaction pathways including free radical formation, homolytic cleavage, cationic oligomerization, and combinations thereof.

The deposit resulting from reaction in an atmospheric pressure air plasma differs from some conventional polymers, oligomers, and monomers. In some conventional monomers, oligomers, and polymers, there is a standard series of one or more building block units, also called mers. As the polymeric chains grow the building block units are repeated and occasionally cross-linked. In a plasma polymer, the building block units may be fragmented and have new functional groups developed. When they recombine, there may be generally higher crosslink density, an increased presence of branched chains, randomly terminated chains, or a combination thereof. The crosslink density calculation becomes more difficult as the number of cross links divided by the number of backbone atoms approaches unity. Such may be the case in plasma polymers. A relative measure of the crosslink density may be the shift in glass transition temperature relative to the conventional polymer. One may expect that at low degrees of crosslinking the shift upwards of the glass transition temperature will be proportional to the number of crosslinks. In plasma polymers, the slope of the proportion may increase relatively by about 10%, 15%, or 20% compared to conventional polymers.

Prepolymers that may be suitable for deposition by atmospheric pressure air plasma include compounds that can be vaporized. The vapors may be metered and blended with a carrier gas. This mixture of gases may be introduced into a plasma generated by an atmospheric pressure air plasma. The ionization gas of the atmospheric pressure air plasma may be chosen from gases typical of welding processes which may include, but are not limited to, noble gases, oxygen, nitrogen, hydrogen, carbon dioxide, and combinations thereof.

Prepolymers used to create a high velocity impact polymer coating may include, but are not limited to, reactive substituted compounds of group 14. Candidate prepolymers do not need to be liquids, and may include compounds that are solid but easily vaporized. They may also include gases that compressed in gas cylinders, or are liquefied cryogenically and vaporized in a controlled manner by increasing their temperature.

It would be desirable to coat the external surface of tire beads or cords to promote adhesion to the surrounding bead area rubber compound matrix. As described above, plasma deposition of polymerizable material and in-situ polymerization/crosslinking via ions of the plasma produce films which promote adhesion to a substrate, such as rubber. The effectiveness of this method partially depends on the uniform deposition of a very thin film of the adhesion promoter.

A conventional plasma nozzle is modified in accordance with the present invention to allow the continuous and concentric feed-through of a bead, cord, or any other elongated cylindrical object. A central bore of the modified nozzle enables the elongated cylindrical object to pass through a center of a plasma stream, resulting in a uniform exposure of the elongated cylindrical object's surface to the plasma, and the uniform deposition of adhesion promoter.

The nozzle thus provides uniform plasma deposition of adhesion coatings on tire beads and cords that may significantly reduce cost and enhance tire properties relative to conventional nozzles. Conventionally, plasma nozzles were merely passed along one side of the bead leading to a non-uniform surface coating. Multiple passes along different sides of the bead improved the coating uniformity, though not significantly enough. Further, these multiple passes increased the process time and the amount of reagent used. Use of the plasma nozzle of the present invention, with a concentric feed-through of the bead, allows for the single-pass treatment of the bead while minimizing the consumption of coating reagent.

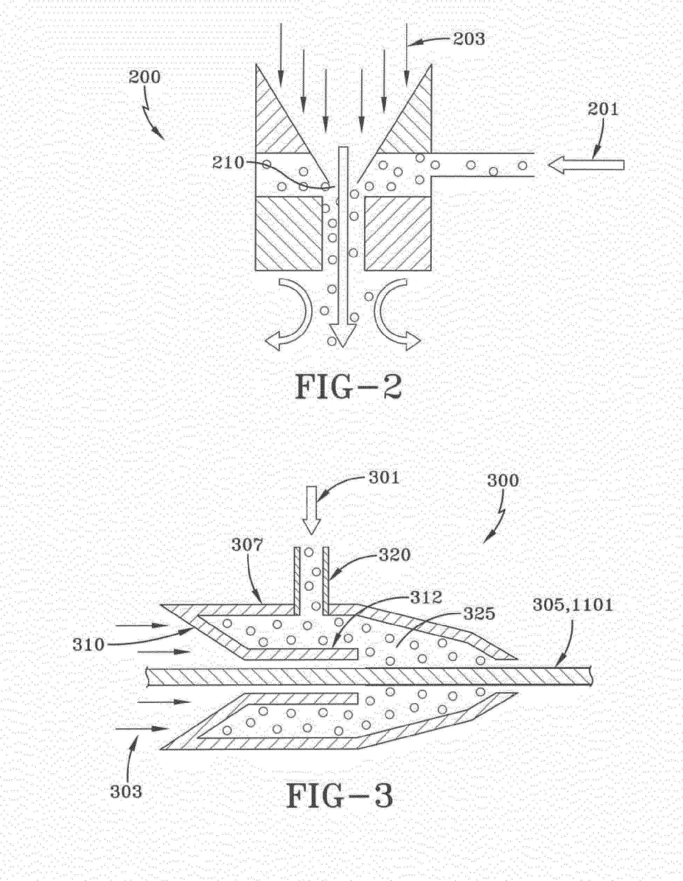

A plasma polymerization nozzle 200, as in FIG. 2, consists of a metallic mixing chamber 210 where an organic precursor 201 is injected upstream and completely mixed with a plasma stream 203 prior to coming out of a round-shaped nozzle. As described above, this type of nozzle does not efficiently produce a uniform coating of a tire bead.

As shown in FIG. 3, a nozzle 300 in accordance with an aspect of the present invention has a cylindrical body 307 with a coaxial and conical inlet 310 for receiving the plasma 303 and the tire bead 305 and a radial inlet 320 for receiving the organic precursor 301. The plasma 303 and tire bead or filament or cord 305 pass axially from the conical inlet 310 through a cylindrical shield chamber 312 having a diameter only somewhat larger than the tire bead itself. The axial length of the cylindrical shield chamber 312 may protect the tire bead or filament or cord 305 from premature deposition of the polymer (i.e., before appropriate mixing can occur). The plasma 303 and the tire bead or filament or cord 305 then pass axially into a mixing chamber 325. The organic precursor 301 passes radially from the radial inlet 320 to the mixing chamber 325 of the nozzle 300. Mixing of the plasma 303 and the organic precursor 301 occurs in the mixing chamber 325, thereby surrounding the cylindrical surface of the tire bead or filament or cord 305 and depositing a thin uniform polymer coating on the entire surface of the tire bead. The tire bead or filament or cord 305 may be fed through the nozzle 300 thereby providing a continuous process for coating tire bead stock of any length.

A filament, cord and pneumatic tire and method in accordance with the present invention combines the two above described methods for improving cord adherence to a rubber matrix at the cord surface rubber interface. The use of steel or textile filament or cord micro-texturing combined with the deposition of a thin plasma coating improves rubber-cord adhesion and durability.

The laser texturing part of the present invention may be conducted on twisted cables and/or filaments. The textures on the cord may intrinsically improve the mechanical aspect of the adhesion to rubber while the ultra-thin plasma coating applied to the textured cord may provide a chemical aspect to the adhesion. The depth of the texturing may not exceed the thickness of the plating (approximately 2 to 5 micrometers) because bare/untextured metal or textile cords may be exposed which may quickly lead to a detrimental rust/bubble/separation formation.

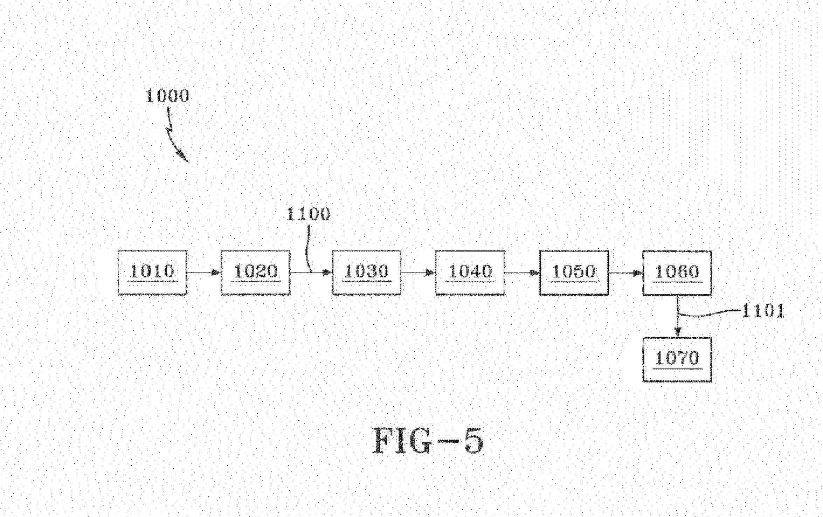

FIG. 5 shows schematic representation of one example procedure 1000 in accordance with the present invention. Electrogalvanized UT filaments 1010 are fed to a cabling module 1020. From the cabling module 1020, the cord/cable 1100 is fed to a steam cleaning module 1030 for removing contaminants, such as drawing lubricants. From the steam cleaning module 1030, the cord 1100 is fed to a laser texturing module 1040 for creating a pattern with a predetermined roughness at the surface of the cord 1100 (e.g., micro-texturing). From the laser texturing module 1040, the cord 1100 is fed to plasma coating module 1050 for plasma polymerization of the cord 1100 by a predetermined mixture of precursor onto the textured cord. From the plasma coating module 1050, the cord 1100 may be fed to a shipping module 1060 for preparing the cord for shipping (e.g., spools, etc.). From the shipping module 1060 the appropriately packaged cord 1101 may be shipped a tire plant 1070 for plying operations, such as in a creel room. Cords 1101 treated according to this process 1000 have shown to exhibit enhanced durability/aged adhesion in rubber matrices, such as pneumatic tires compared to either texturing or plasma polymerization alone. This process 1000 may eliminate brass and the associated brass corrosion issues as well as increase the life of casings for retreaded truck tires.

A cord 1101 having a laser micro-textured surface beneath a plasma polymerized surface may exhibit improved adhesion to a rubber matrix, such as cords used in pneumatic tires (e.g., a carcass ply, belt ply, overlay, apex, flipper, chipper, runflat insert, gum strip, etc.) in accordance with the present invention. Such improved adhesion may thereby improve functional properties of a pneumatic tire.

## Claims

1. A method for forming an adhesion joint between a filament (1010) or cord (1100) and a rubber matrix, the method comprising the steps of:
providing a filament (1010) or a cord (1100) having an initial relatively smooth surface;
texturing the smooth surface or the filament (1010) or a cord (1100) such that the resulting surface is rougher than the initial surface of the filament (1010) or cord (1100);
depositing a polymer coating, preferably an uniform polymer coating, onto the textured surface of the filament (1010) or cord (1100) by plasma polymerization of an organic precursor (201, 301) in a plasma (203, 303), preferably an air plasma and/or an atmospheric plasma; and
inserting the textured and coated filament (1010) or cord (1101) into a rubber matrix.

2. The method as set forth in claim 1 wherein the texturing step is performed by a laser, chemically such as by etching, or electrochemically.

3. The method as set forth in claim 1 or 2, further comprising placing the textured and coated filament or cord (1101) in a carcass ply or in a belt ply for use in a pneumatic tire.

4. The method as set forth in claim 1 or 2, further comprising placing the textured and coated filament or cord (1101) in a flipper, an apex, a gum strip, a runflat insert, a chipper or an overlay for use in a pneumatic tire.

5. The method as set forth in at least one of the previous claims wherein the texturing is a micro-texturing.

6. A cord or filament for use in a pneumatic tire wherein the cord (1101) or the filament is micro-textured and comprises a polymer coating.

7. The cord or filament of claim 6 wherein the polymer coating is a preferably uniform polymer coating on the micro-textured surface of the filament (1010) or cord (1100).

8. The cord or filament of claim 6 or 7 wherein the polymer coating is a plasma polymerization coating from an organic precursor (201, 301).

9. The cord or filament of claim 6, 7 or 8 wherein the filament or cord (1101) is constructed of steel.

10. The cord of at least one of the claims 6 to 9 wherein the cord (1101) comprises micro-textured filaments or micro-textured steel filaments.

11. The cord of claim 10 wherein the filaments are individually coated by the polymer coating and/or wherein the cord (1101) is coated by the polymer coating.

12. The cord of claim 10 wherein the cord (1101) comprises filaments or steel filaments placed in the cord prior to the cord being micro-textured and prior to coating of the cord.

13. A pneumatic tire comprising a reinforcing structure comprising a filament or cord (1101) in accordance with at least one of the claims 6 to 12.

14. The tire of claim 13 wherein the tire comprises a carcass comprising a reinforcing ply structure extending between a pair of bead portions, a pair of sidewalls, each sidewall located radially outward of one of the pair of bead portions; a tread; a belt reinforcing structure located radially outward of the carcass and radially inward of the tread; and an apex located in each sidewall; and wherein the reinforcing structure is reinforced with said filament or cord (1101), said filament or cord (1101) having a surface modified both by micro-texturing and plasma polymerization.

15. The pneumatic tire as set forth in claim 13 or 14 wherein the reinforcing structure is the carcass, the carcass reinforcing ply structure, the belt reinforcing structure, or the apex, or wherein the reinforcing structure is located adjacent one of the bead portions or the tire.
